# EUROPÄISCHE PATENTSCHRIFT

(11) **EP 3 004 252 B1**
(45) Veröffentlichungstag und Bekanntmachung des Hinweises auf die Patenterteilung: **26.02.2020**
(21) Anmeldenummer: 14727765.1
(22) Anmeldetag: 22.05.2014
(51) Int. Cl.: C09C 1/00, C09D 7/62, C09D 5/36, C09D 7/40, C08K 9/06, C08K 3/08, C09D 133/08

(54) **VERWENDUNG VON MODIFIZIERTEN EFFEKTPIGMENTEN IN STRAHLENHÄRTBAREN BESCHICHTUNGSZUSAMMENSETZUNGEN**
USE OF MODIFIED EFFECT PIGMENTS IN RADIATION-CURABLE COATING COMPOSITIONS
UTILISATION DE PIGMENTS À EFFET MODIFIÉS DANS DES COMPOSITIONS DE REVÊTEMENT RADIODURCISSABLES

(30) Priorität: 24.05.2013 DE 102013008926
(43) Veröffentlichungstag der Anmeldung: 13.04.2016
(73) Patentinhaber: Schlenk Metallic Pigments GmbH, 91154 Roth - Barnsdorf (DE)
(72) Erfinder: REITER, Andreas, 91154 Roth (DE); LANG, Nina, 91052 Erlangen (DE); MÜLLER, Christa, 91792 Ellingen (DE); BARTELT, Michael, 91154 Roth (DE)
(74) Vertreter: Heinemann, Monica
(86) Internationale Anmeldenummer: PCT/EP2014/060557
(87) Internationale Veröffentlichungsnummer: WO 2014/187907

(56) Entgegenhaltungen:
- DE-A1- 10 361 437
- DE-A1-102005 037 611
- DE-A1-102011 103 882
- US-A1- 2011 118 384

## Beschreibung

Die Erfindung betrifft die Verwendung von mit organischen Verbindungen modifizierten Effektpigmenten in strahlenhärtbaren Beschichtungszusammensetzungen.

Pigmente, insbesondere auch Metallpigmente, werden häufig in Lacken, Farben, Druckfarben, Pulverlacken, Kosmetika oder Kunststoffen zur Farbgebung eingesetzt. Bei Farben, Lacken, Druckfarben, Kosmetika, Pulverlacken handelt es sich um flüssige oder pulverförmige Beschichtungsstoffe, die auf Oberflächen aufgebracht werden, um sowohl verbesserte optische als auch physikalische Eigenschaften, wie etwa Korrosionsschutz, zu erhalten. Nach dem Aufbringen der Beschichtungszusammensetzungen werden diese durch physikalische und/oder chemische Methoden gehärtet, um einen durchgängigen festen Film auf dieser Oberfläche zu bilden. Diese physikalischen und chemischen Methoden zur Härtung umfassen beispielsweise das Verdampfen von Lösungsmittel oder die Härtung mittels elektromagnetischer Strahlung wie etwa UV-Strahlung.

Die Verwendung der UV-Technologie bringt einige Vorteile gegenüber anderen Methoden im Hinblick auf Sparsamkeit bezüglich Energie, Platz und Prozesszeit; außerdem kann eine Verwendung von Lösungsmitteln vermieden werden und die UV-Technologie ermöglicht eine Verarbeitung bei Raumtemperatur. Dies geht einher mit einer verbesserten Umweltverträglichkeit wie auch einer hohen Qualität des beschichteten Produkts. Die UV-Technologie im weiteren Sinne umfasst auch UV/Wasserhybridsysteme sowie ElektroBeam-(EB)- Technologien.

Farben und Lacke umfassen in der Regel Bindemittel, Lösungsmittel, Pigmente und gegebenenfalls Füllstoffe. Als Pigmente finden häufig Metalleffektpigmente Anwendung, um Erzeugnisse mit hoher optischer Wertigkeit zu erhalten. Metalleffektpigmente zeichnen sich durch einen hohen metallischen Glanz und ein sehr gutes Deckvermögen aus. Die optische Wirkung von Metalleffektpigmenten resultiert aus der Reflexion von Licht an den parallel ausgerichteten Metallplättchen.

Jedoch stellt die Verwendung von Effektpigmenten, insbesondere von Metalleffektpigmenten, in Lacken, Farben, Druckfarben, Pulverlacken, Kosmetika oder Kunststoffen häufig ein Problem dar, im Speziellen bei der Verwendung in UV-härtenden Systemen. Eine Schwierigkeit bei der Verwendung von Metalleffektpigmenten in UV-härtbaren Beschichtungszusammensetzungen liegt darin, dass bei UV-härtbaren Beschichtungszusammensetzungen die Aushärtung innerhalb von Sekundenbruchteilen stattfindet, und der dadurch resultierende Filmschrumpf eine parallele Ausrichtung der Metallpigmente verhindert. Dadurch werden die optischen Eigenschaften der Effektpigmente stark verschlechtert. Ferner war die Abriebbeständigkeit von Beschichtungen mit konventionellen, unbehandelten Metalleffektpigmenten in UV-härtbaren Systemen nicht optimal. Gegenwärtig erfolgt eine Optimierung der Eigenschaften von Beschichtungssystemen üblicherweise durch das Aufbringen von Reagenzien auf Metallpigmente, die ein Aufschwimmen der Pigmente ("Leafing") in der Druckfarbe bzw. dem Lack hervorrufen. Durch dieses sog. Leafing-Verhalten richten sich die Partikel an der Lackfilmoberfläche aus, was eine Verbesserung des Glanzes und der Brillanz des Druckfilms ergibt. Dies wirkt sich im Umkehrschluss jedoch negativ auf Haftung und Abriebbeständigkeit sowie Zwischenschichthaftung bei Mehrschichtaufbauten aus.

EP 1 084 198 B1 beschreibt Effektpigmente für wässrige Beschichtungssysteme, welche mit reaktiven Orientierungshilfsmitteln beschichtet sind. Die darin beschriebenen Pigmente zeigen ein Non-Leafing-Verhalten und sollen einerseits leicht vom Bindemittel einer wässrigen Farbe oder eines wässrigen Lacks benetzt werden und andererseits mit der umgebenden Bindemittelmatrix einen innigen Verbund eingehen. Hiermit soll die Schwitzwasserbeständigkeit sowie die Beständigkeit gegen korrosive Einflüsse eines gehärteten Lacks auf Basis eines wässrigen Beschichtungssystems verbessert werden.

DE 103 61 437 A1 betrifft Metallpigmente mit Beschichtung, wobei die Beschichtung die Metalpigmente umhüllt und chemisch vernetzbare(s) und/oder unter Einwirkung von Wärme, IR-Strahlung, UV-Strahlung und/oder Elektronenstrahlen vernetzbare(s) oligomere(s) und/oder polymere(s) Bindemittel umfasst, wobei die beschichteten Metallpigmente als Pulver, welches eine Korngröße d₅₀ von weniger als 190 µm aufweist, vorliegen und nach Aushärtung in einem Pulverlack korrionsbeständig ist.

DE 10 2011 103 882 A1 betrifft plättchenförmige kupferhaltige Metallpigmente, welche einen Gehalt an elementarem Kupfer von wenigstens 50 Gew.-%, bezogen auf das Gewicht des unbeschichteten kupferhaltigen Metallpigmentes aufweisen, dadurch gekennzeichnet, dass die kupferhaltigen Metallpigmente wenigstens eine umhüllende Metalloxidschicht und wenigstens eine umhüllende chemisch nichtreaktive Kunststoffschicht aufweisen, wobei die Summe der Gehalte der wenigstens einen chemisch nichtreaktiven Kunststoffschicht und der wenigstens einen Metalloxidschicht in einem Bereich von 10 bis 50 Gew.-%, bezogen auf das Gewicht des unbeschichteten Metallpigments, liegt und das Gewichtsverhältnis der wenigstens einen Metalloxidschicht zur wenigstens einen chemisch nichtreaktiven Kunststoffschicht in einem Bereich von 1:2 bis 1:20 liegt.

US 2011/0118384 A1 beschreibt ein Perlglanzpigment, das ein plättchenförmiges Substrat, eine Metalloxidbeschichtung, die eine Metalloxidschicht mit einem Brechungsindex größer 1,8 umfasst und eine Schutzschicht umfasst, wobei die Schutzschicht eine Metalloxid- / Hydroxid-Schicht enthält, auf die eine organische Nachbeschichtung eines Acrylcopolymers aufgebracht wird, wobei das Metalloxid / Hydroxid der Schutzschicht ausgewählt ist aus Oxiden / Hydroxiden von Silizium, Aluminium, Zirconium, Magnesium, Calcium, Eisen(III), Yttrium, Cer, Zink und Kombinationen davon.

DE 10 2005 037 611 A1 betrifft Metalleffektpigmente mit Beschichtung, umfassend ein plättchenförmiges Substrat, wobei die Beschichtung wenigstens eine anorganisch/organische Mischschicht umfasst, wobei die Mischschicht wenigstens teilweise ein anorganisches Netzwerk, das eine oder mehrere anorganische Oxidkomponente(n) aufweist, und wenigstens eine organische Komponente aufweist, wobei die organische Komponente wenigstens teilweise ein organisches Oligomer und/oder Polymer ist, welches wenigstens teilweise mit dem anorganischen Netzwerk über einen oder mehrere organische Netzwerkbildner kovalent verbunden ist.

US 2012/0287213 A1 offenbart eine 1K-UV-Tintenstrahldruck-Zusammensetzung, umfassend Effektpigmente. Die Zusammensetzung umfasst: a) mindestens ein difunktionelles (Meth)acrylatmonomer, b) mindestens einen Photoinitiator, c) Effektpigmente mit einer volumengemittelten Teilchengrößenverteilung mit einem D₉₈ <10 µm, d) gegebenenfalls trifunktionelle und/oder polyfunktionelle (Meth)acrylatmonomere.

Wie bereits zuvor beschrieben, stellt speziell in UV-härtenden Druckfarben oder Lacken die Ausrichtung von Metallpigmenten nach heutigem Stand der Technik ein Problem dar, da durch die vollständige Aushärtung innerhalb von Sekundenbruchteilen und den dadurch resultierenden Filmschrumpf eine parallele und homogene Ausrichtung der Metalleffektpigment, besonders bei Vakuum Metallisierten Pigmenten, nicht möglich ist, sofern es sich um unbehandelte Pigmente handelt. Der Fachmann versteht unter Vakuum Metallisierten Pigmenten Metalleffektpigmente, die durch Ablösen und Zerkleinern von im Hochvakuum metallisierten PET-Folien hergestellt werden.

Die Aufgabe ist es nun, ein Pigment/Beschichtungssystem bereitzustellen, welches beim UV-Härten von Druckfarben und Lacken sowohl gute anwendungstechnische als auch gute optische Eigenschaften aufweist. Unter anwendungstechnischen Eigenschaften werden im Rahmen der vorliegenden Erfindung insbesondere eine sehr gute Abriebbeständigkeit sowie eine gute Vernetz- und Benetzbarkeit des Pigmentes in dem UV-härtbaren System verstanden. Unter guten optischen Eigenschaften sind ein sehr hoher Glanz und gutes Deckvermögen zu verstehen.

Es wurde nun überraschenderweise gefunden, dass in einer strahlenhärtbaren Beschichtungszusammensetzung die Verwendung von bestimmten, wie in Anspruch 1 oder 2 beschriebenen, modifizierten Effektpigmenten in ausgezeichneten lacktechnischen wie auch optischen Eigenschaften resultiert. Insbesondere werden im Rahmen der vorliegenden Erfindung Beschichtungen erhalten, die eine hervorragende Abriebbeständigkeit in Kombination mit sehr guten metallischen Effekten aufweisen. Ein weiterer Vorteil ist die verbesserte Lagerstabilität der entsprechenden Lacke und Farben.

Die vorliegende Erfindung betrifft daher die Verwendung eines modifizierten Effektpigments in einer strahlenhärtbaren Beschichtungszusammensetzung, wobei das modifizierte Effektpigment keine organischen Oligomere oder Polymere aufweist und wobei das modifizierte Effektpigment ein Effektpigment ist, welches beschichtet ist mit einer Schicht aus einem Metalloxid, umfassend Siliziumdioxid, Aluminiumoxid, oder Mischungen davon, dadurch gekennzeichnet, dass an die Schicht mindestens eine organische Verbindung, die eine oder mehrere funktionelle Gruppen mit einer Kohlenstoff-Kohlenstoff-Mehrfachbindung aufweist, gebunden ist. Über die Kohlenstoff-Kohlenstoff-Mehrfachbindung(en) der organischen Verbindung kann das Effektpigment mit den reaktiven Monomeren oder Bindemitteln im strahlenhärtbaren bzw. bevorzugt im UV-härtbaren Beschichtungssystem vernetzen. Die vorliegende Erfindung ist auf strahlenhärtbare Systeme gerichtet, und umfasst keine Systeme, die unter Hitzeeinwirkung härten, wie beispielsweise Pulverlacke.

Die Erfindung betrifft weiterhin die Verwendung eines modifizierten Effektpigments in einer strahlenhärtbaren Beschichtungszusammensetzung, wobei das modifizierte Effektpigment keine organischen Oligomere oder Polymere aufweist und wobei das modifizierte Effektpigment ein Effektpigment ist, an das mindestens eine organische Verbindung, die eine oder mehrere funktionelle Gruppen mit einer Kohlenstoff-Kohlenstoff-Mehrfachbindung aufweist, gebunden ist, wobei es sich vorzugsweise bei der funktionellen Gruppe um eine Acrylatgruppe, eine Methacrylatgruppe, ein gespanntes Ringsystem oder eine Vinylgruppe handelt, und/oder wobei die Kohlenstoff-Kohlenstoff- Mehrfachbindung vorzugsweise endständig ist. Über die Kohlenstoff- Kohlenstoff-Mehrfachbindung(en) der organischen Verbindung kann das Effektpigment mit den reaktiven Monomeren oder Bindemitteln im strahlenhärtbaren bzw. bevorzugt im UV-härtbaren Beschichtungssystem vernetzen.

Diese erfindungsgemäßen modifizierten Effektpigmente sind nach einer Ausführungsform mit einer Schicht aus einem oder mehreren Metalloxiden bedeckt, und an diese Metalloxidschicht ist mindestens eine organische Verbindung, die eine oder mehrere funktionelle Gruppen mit einer Kohlenstoff-Kohlenstoff-Mehrfachbindung aufweist, gebunden. Teil der Erfindung ist nach einer anderen Ausführungsform auch die Verwendung von modifizierten Effektpigmenten, die keine Metalloxidschicht auf der Effektpigmentoberfläche aufweisen, sondern bei denen die organische modifizierende Verbindung, die vorzugsweise endständig ist oder wie vorstehend definierte funktionelle Gruppen trägt, direkt an die Effektpigmentoberfläche gebunden ist. Über die Kohlenstoff-Kohlenstoff-Mehrfachbindungen der organischen Verbindungen können die Effektpigmente bei der Strahlenhärtung bzw. bevorzugt UV-Härtung mit den reaktiven Monomeren im strahlenhärtbaren bzw. bevorzugt im UV-härtbaren Beschichtungssystem vernetzen.

Unter strahlenhärtbaren Beschichtungszusammensetzungen werden im Rahmen der vorliegenden Erfindung Zusammensetzungen verstanden, die unter Einwirkung von UV-Licht bzw. UV-Strahlung, IR oder Elektronenstrahlen härten. Vorzugsweise handelt es sich um UV-härtbare Beschichtungszusammensetzungen.

Für die erfindungsgemäß verwendeten Effektpigmente können übliche Metalleffektpigmente verwendet werden. Bevorzugt sind diese Metalleffektpigmente ausgewählt aus der Gruppe bestehend aus Aluminium, Titan, Zirkonium, Kupfer, Zink, Gold, Silber, Zinn, Stahl, Eisen. Des Weiteren können auch Legierungen der genannten Metalle wie Goldbronze oder Silberbronze verwendet werden. Im Rahmen der Erfindung können auch spezielle Effektpigmente wie Perlglanzpigmente, Glimmer, oder Mischungen davon eingesetzt werden. Bevorzugt sind Aluminiumpigmente, insbesondere Cornflake oder Silberdollar-Pigmente. Besonders bevorzugt können auch Vakuum Metallisierte Pigmente (VMP) verwendet werden wie etwa DECOMET® Partikel, erhältlich bei der Firma Schlenk Metallic Pigments GmbH, Roth, Deutschland.

Vorzugsweise weist das modifizierte Effektpigment eine Metalloxidschicht auf. Die in der Metalloxidschicht verwendeten Oxide umfassen Siliziumdioxid, Aluminiumoxid oder Mischungen davon. Die Auftragung der Metalloxidschicht erfolgt nach dem Fachmann bekannten Verfahren. Vorzugsweise wird die Metalloxidschicht über ein Sol-Gel-Verfahren vorgenommen, bei dem Tetraethylorthosilikat, ein kurzkettiger Alkohol, Wasser und eine Base eingesetzt werden.

Die zur Modifizierung der Effektpigmente eingesetzten organischen Verbindungen enthalten mindestens eine funktionelle Gruppe mit einer Kohlenstoff-Kohlenstoff-Mehrfachbindung. Bei der Kohlenstoff-Kohlenstoff-Mehrfachbindung handelt es sich insbesondere um eine C=C. Diese Kohlenstoff-Doppelbindungen sind nach Möglichkeit endständige Doppelbindungen, um eine erhöhte Reaktivität mit dem Bindemittel bzw. Monomer des strahlen- bzw. UV-härtbaren Systems und damit eine bessere Vernetzung zu erreichen. Bei den funktionellen Gruppen mit Kohlenstoff-Kohlenstoff-Mehrfachbindungen handelt es sich bevorzugt um eine Acrylatgruppe, eine Methacrylatgruppe oder eine Vinylgruppe. Ebenfalls bevorzugt sind gespannte Ringsysteme wie ein Cyclopropanring, ein Cyclobutanring, ein Cyclohexanring, ein Epoxid (Oxiran), gespannte Ringsysteme und ein Oxiran, z.B. Epoxycyclobutyl, Epoxycyclopentyl, Epoxycyclohexyl, Epoxycyclooctyl, oder ein Aziridin sowie Derivate davon, die im Rahmen der vorliegenden Erfindung ebenfalls unter den Begriff Kohlenstoff-Kohlenstoff-Mehrfachbindung zu subsumieren sind.

Bevorzugte Beispiele für die erfindungsgemäßen organischen Verbindungen, die an die Metalloxidschicht bzw. an die Effektpigmentoberfläche gebunden sind, sind Silane, Säureanhydride sowie phosphororganische Verbindungen und Titanate und Borate mit mindestens einer Kohlenstoff-Kohlenstoff-Mehrfachbindungsfunktionalität. Vorzugsweise handelt es sich um niedermolekulare Verbindungen mit einem Molekulargewicht im Bereich von 120 g/mol bis 440 g/mol, insbesondere 150 g/mol bis 400 g/mol, besonders bevorzugt 200 g/mol bis 250 g/mol. Besonders bevorzugt werden Acrylsilane, Methacrylsilane, bzw. Maleinsäureanhydrid oder Phosphonsäuren wie eine Vinylphosphonsäure oder ein Vinylphosphonat eingesetzt. Beispielsweise können als erfindungsgemäße Silane verwendet werden: Methacryloxypropenyltrimethoxysilan, 3-Methacryloxypropyltrimethoxysilan, 3-Acryloxypropyltrimethoxysilan, 2-Acryloxyethyltrimethoxysilan, 3-Methacryloxypropyltriethoxysilan, 3-Acryloxypropyltrimethoxysilan, 2-Methacryloxyethyltriethoxysilan, 2-Acryloxyethyltriethoxysilan, 3-Methacryloxypropyltris(methoxyethoxy)silan, 3-Methacryloxypropyltris(butoxyethoxy)silan, 3-Methacryloxypropyltris(propoxy)silan, 3-Methacryloxypropyltris(butoxy)silan, 3-Acryloxypropyltris(methoxyethoxy)silan, 3-Acryloxypropyltris(butoxyethoxy)silan, 3-Acryloxypropyltris(butoxy)silan, Vinyltrimethoxysilan, Vinyltriethoxysilan, Vinylethyldichlorsilan, Vinylmethyldiacetoxysilan, Vinylmethyldichlorsilan, Vinylmethyldiethoxysilan, Vinyltriacetoxysilan, Vinyltrichlorsilan, Phenylvinyldiethoxysilan, Phenylallyldichlorsilan etc. Besonders bevorzugte Beispiele für ein Silan sind die methacrylatfunktionellen Produkte Dow Corning Z 6030 oder Dynasylan ® MEMO.

Bei der organischen Verbindung handelt es sich um eine monomere Verbindung, und nicht um eine oligomere oder polymere Verbindung. Bevorzugte Beispiele solcher monomeren organischen Verbindung mit Kohlenstoff-Kohlenstoff-Mehrfachbindungsfunktionalität sind vorstehend angegeben.

Bevorzugt sind ferner organische Verbindungen wie Silane, Säureanhydride oder phosphororganischen Verbindungen mit Kohlenstoff-Kohlenstoff-Doppelbindung, die neben der Kohlenstoff-Kohlenstoff-Doppelbindung keine weitere funktionelle Gruppe wie beispielsweise eine Hydroxyl-, Amino-, oder Carbonsäuregruppe tragen. Neben der erfindungsgemäß zu verwendenden organischen Verbindung zur Vernetzung mit dem Pigment und dem Bindemittel kann jedoch noch eine zweite organische Verbindung auf dem Pigment eingesetzt werden, die eine andere funktionelle Gruppe als eine Kohlenstoff-Kohlenstoff-Mehrfachbindung aufweist, wobei diese andere funktionelle Gruppe eine reaktive Gruppe ist, die mit dem Bindemittel reagiert. Bevorzugt ist auch die zweite gegebenenfalls vorliegende organische Verbindung ein Monomer.

Die organischen Verbindungen, insbesondere die Silane, Säureanhydride oder phosphororganischen Verbindungen, können mit der Metalloxidschicht des Effektpigments Bindungen eingehen. Bevorzugt sind diese organischen Verbindungen über die Silangruppe, die Phosphonatgruppe oder eine der Säuregruppen kovalent an die Metalloxidschicht auf dem Effektpigment (bzw. bei Fehlen der Metalloxidschicht an die Effektpigmentoberfläche) gebunden. Die Kohlenstoff-Kohlenstoff-Mehrfachbindung ist dementsprechend auf der vom Pigment abgewendeten Seite und kann mit den Bindemitteln bzw. den entsprechenden Monomeren des strahlenhärtbaren, bevorzugt UV-härtbaren Beschichtungssystems reagieren. Bei einem modifizierten Effektpigment im Sinne der Erfindung handelt es sich folglich zum Einen um ein Effektpigment, welches beschichtet ist mit einer Schicht aus einem Metalloxid, umfassend Siliziumdioxid, Aluminiumoxid oder Mischungen davon, dadurch gekennzeichnet, dass an die Schicht mindestens eine organische Verbindung, die eine oder mehrere funktionelle Gruppen mit einer Kohlenstoff-Kohlenstoff-Mehrfachbindung aufweist, gebunden ist. Zum anderen kann es sich um ein Effektpigment handeln, wobei an das Effektpigment mindestens eine organische Verbindung, die eine oder mehrere funktionelle Gruppen mit einer Kohlenstoff-Kohlenstoff-Mehrfachbindung aufweist, gebunden ist.

Das erfindungsgemäß zu verwendende modifizierte Effektpigment weist keine organischen Oligomere oder Polymere auf. Das modifizierte Effektpigment weist dabei insbesondere keine Beschichtung aus oligomeren oder polymeren Bindemitteln (wie beispielsweise Polyacrylaten oder Polymethacrylaten oder anderen Kunstharzbeschichtungen) auf, weder als separate, gegebenenfalls vernetzbare Beschichtung noch als Vernetzung mit der erfindungsgemäßen organischen Verbindung. Vor der erfindungsgemäßen Verwendung in einer strahlenhärtbaren Zusammensetzung sind am modifiziertem Effektpigment (monomere) organische Verbindungen, die eine oder mehrere funktionelle Gruppen mit einer Kohlenstoff-Kohlenstoff- Mehrfachbindung aufweisen, gebunden, nicht aber organische Polymere oder Oligomere.

Bevorzugt ist ferner die erfindungsgemäße Verwendung von einem modifizierten Effektpigment, wobei das modifizierte Effektpigment aus einem Effektpigment, welches gegebenenfalls beschichtet ist mit einer Schicht aus einem Metalloxid, umfassend Siliziumdioxid, Aluminiumoxid oder Mischungen davon, und mindestens einer organischen Verbindung besteht, wobei die organische Verbindung eine oder mehrere funktionelle Gruppen mit einer Kohlenstoff-Kohlenstoff-Mehrfachbindung aufweist, und wobei die organischen Verbindung an das Effektpigment oder die gegebenenfalls vorliegende Schicht aus einem Metalloxid gebunden ist. Wie vorstehend beschrieben liegt die organische Verbindung als Monomer vor.

Die organischen Verbindungen können in dem modifizierten Pigment in einer Menge von 0,01 bis 10 Gew.-%, bezogen auf das Gesamtgewicht von Effektpigment mit Metalloxidschicht und organischer Modifizierung, vorliegen.

Für die Ausführungsform ohne Metalloxidschicht können die organischen Verbindungen in dem modifizierten Pigment in einer Menge von 0,01 bis 10 Gew.-%, bezogen auf das Gesamtgewicht von Effektpigment und organischer Modifizierung, vorliegen. Dies entspricht jeweils dem Gesamtgewicht des Gesamtfestkörpers der beschichteten, modifizierten Pigmente. Vorzugsweise liegt der Anteil im Bereich von 0,05 bis 5 Gew.-%, besonders bevorzugt bei 0,5 bis 3 Gew.-%, noch bevorzugter bei 1,2 bis 2,5 Gew.-%.

In einer bevorzugten Ausführungsform liegt, bezogen auf das Gesamtgewicht des Gesamtfestkörpers, der Anteil an organischer Verbindung, bevorzugt an methacrylatfunktionellem Silan, bei 0,05 bis 5 Gew.-%, vorzugsweise 0,5 bis 3 Gew.-%, der Anteil an Effektpigment, bevorzugt Aluminium, bevorzugt bei 25 bis 92,5 Gew.-%, vorzugsweise 50 bis 90 Gew.-%, und ganz besonders bevorzugt 70 bis 85 Gew.-%, der Anteil an Metalloxidschicht, bevorzugt Siliciumdioxid, bei 8 bis 80 Gew.-%, vorzugsweise 10 bis 50 Gew.-%.und 12 - 25 Gew.-%.

Für die Herstellung der modifizierten Effektpigmente kann das metalloxidbeschichtete Effektpigment in einem Lösungsmittel, beispielsweise Isopropanol, vorgelegt und erwärmt werden, auf beispielsweise 35 bis 60 °C. Nach Zugabe einer Base, wie beispielsweise Ammoniak oder einem Amin, und gegebenenfalls Wasser, wird die zur Funktionalisierung verwendete organische Verbindung zugegeben. Die Zugabe der Base kann auch zeitgleich mit der Zugabe der organischen Verbindung erfolgen. Anschließend wird die Mischung für eine gewisse Zeit gerührt, beispielsweise 1 bis 20 Stunden. Nach Abkühlen kann die Mischung mit einem geeigneten Lösungsmittel, beispielsweise Isopropanol, auf den gewünschten Feststoffgehalt eingestellt werden. Die Mischung kann auch nach Reaktionsende aufkonzentriert werden, und der erhaltene Filterpigmentkuchen kann entweder in einem geeigneten Lösungsmittel re-dispergiert werden, oder das Lösungsmittel entfernt werden. Vorzugsweise erfolgt eine Redispergierung, beispielsweise in Isopropanol. Der Feststoffgehalt der modifizierten Pigmentmischung kann im Bereich von 1 bis 50 Gew.-% liegen, vorzugsweise bei 5 bis 15 Gew.-%. Die Herstellung des Effektpigments mit organischer Modifizierung aber ohne Metalloxidschicht erfolgt auf analoge Art und Weise durch Verwendung des entsprechenden Effektpigments ohne Metalloxidschicht.

Im Rahmen der erfindungsgemäßen Verwendung werden die modifizierten Effektpigmente bevorzugt als Dispersion in der strahlenhärtbaren Zusammensetzung eingesetzt. Vorzugsweise wird das modifizierte Effektpigment nicht als Pulver eingesetzt.

Es versteht sich, dass die vorstehend genannten und die nachstehend noch zu erläuternden Merkmale nicht nur in den angegebenen Kombinationen, sondern auch in andere Kombinationen oder in Alleinstellung einsetzbar sind, ohne den Rahmen der vorliegenden Erfindung zu verlassen. Insbesondere gilt dies für die konkret genannten organischen Verbindungen, Effektpigmente, Metalloxidschichten, Bindemittel, Monomere und deren jeweiligen Mengen, deren verschiedene Kombinationen als erfindungsgemäß offenbart anzusehen sind.

Die Einarbeitung und Vermischung der erfindungsgemäßen, modifizierten Pigmente in die UV-Beschichtungssysteme erfolgt auf übliche, dem Fachmann geläufige Art. Insbesondere eignen sich Rührwerke mit Propeller- oder Flügelrührer zum Dispergieren und homogenen Vermischen der Pigmente in dem Beschichtungssystem. Die modifizierten Pigmente können dabei zu einer im Wesentlichen fertigen Mischung gegeben werden, die bereits sämtliche Additive enthält, oder zu einem Vorprodukt, in das die Pigmente und anschließend die Additive eingemischt werden.

Die erfindungsgemäßen organischen Verbindungen, welche an der Metalloxidschicht des Effektpigments gebunden sind, werden während der Härtungsreaktion mit den Bindemitteln des strahlenhärtbaren, bevorzugt UV-härtbaren Beschichtungssystems mitvernetzt. Während der Härtung von Beschichtungen mit UV-Strahlung entstehen, gegebenenfalls durch die Verwendung von Photoinitiatoren, UV-induzierte kohlenstoffzentrierte Radikale, welche ihren Ursprung in mono-, di- oder polyfunktionalen Acrylaten und/oder Methacrylaten haben, die im Bindemittel des Systems enthalten sind. Die Radikalkettenreaktion dieser Bestandteile des Bindemittels mit sich selbst wie auch mit den Kohlenstoff-Kohlenstoff-Mehrfachbindungen der Modifizierungsbeschichtung der Metalleffektpigmente führt zu einer Aushärtung der Beschichtung und einer damit einhergehenden Mitvernetzung der Metalleffektpigmente.

Die Verwendung der vorliegenden Erfindung führt überraschenderweise zu Beschichtungen, die die prozessbedingten Vorteile der UV-Technologie mit einer unerwartet hohen mechanischen Beständigkeit (Abriebbeständigkeit) und einem schönen Metalleffekt kombiniert.

Als UV-härtbare Beschichtungszusammensetzungen können übliche, dem Fachmann bekannte lösungsmittelhaltige UV/Hybridsysteme oder wässrige UV-Hybridsysteme sowie 100% lösungsmittelfreie Beschichtungssysteme eingesetzt werden. Solche Beschichtungssysteme enthalten üblicherweise Bindemittel (insbesondere Präpolymere), Lösemittel, Wasser, reaktive polymerisierbare Monomere (Reaktivverdünner), und Photoinitiatoren, oder nur Monomere, Präpolymere (Bindemittel) und Photoinitiatoren. Besonders bevorzugt sind 100% lösungsmittelfreie Beschichtungssysteme.

Als UV-härtbare Bindemittel können übliche, dem Fachmann bekannte Bindemittel eingesetzt werden, wobei sich sowohl radikalisch polymerisierbare als auch kationisch polymerisierbare Bindemittel eignen. Beispiele für radikalische polymerisierbare Bindemittel sind insbesondere Acrylat- oder Methacrylat-funktionelle Polymere, Präpolymere oder Oligomere wie Polyester(meth)acrylate, Polyether(meth)acrylate, Amino(meth)acrylate, (Meth)acrylcopolymere, Polyurethan(meth)acrylate, Epoxidharz(meth)acrylate. Vorzugsweise enthalten die Bindemittel 2 bis 20 polymerisierbare olefinische Doppelbindungen pro Molekül. Besonders bevorzugt sind 2 bis 6. Beispiele für kationisch polymerisierbare Bindemittel sind insbesondere Epoxyoligomere, wie beispielsweise Glycerintriglycidylether, Polyalkylenglykoldiglycidylether, und Epoxyurethanharze. Die Bindemittel werden in üblichen, dem Fachmann geläufigen Mengen eingesetzt, insbesondere in Mengen bis zu 50 Gew.-% der Beschichtungszusammensetzung, vorzugsweise bis 15 Gew.-%.

Die erfindungsgemäßen strahlen- bzw. vorzugsweise UV-härtbaren Beschichtungssysteme können UV-härtende Monomere, die auch als Reaktivverdünner bezeichnet werden, enthalten. Hierunter werden Moleküle verstanden die eine oder mehrere reaktive Kohlenstoff-Kohlenstoff-Mehrfachbindungen besitzen. Als Reaktivverdünner können übliche, dem Fachmann bekannte Monomere eingesetzt werden. In einer bevorzugten Ausführungsform sind dies Acrylatmonomere, Methacrylatmonomere oder Vinylmonomere. Beispiele für mehrfachfunktionelle Acrylate bzw. Methacrylate, die im Bindemittel eingesetzt werden können, sind: Tetraethylenglycoldiacrylat, Triethylenglycoldiacrylat, Tetraethylenglacoldimethacrylat, Triethylenglycol dimethacrylat, Polyethylen-glycol-400-diacrylat, 2,2'-Bis(4-acryloxyethoxyphenyl)propan, Ethylenglycoldimethacrylat, Diethylenglycol dimethacrylat, 1,6-Hexandioldimethacrylat, 1,6-Hexandioldiacrylat, 1,12-Dodecandioldimethacrylat, Neopentylglycol-dimethacrylat und Trimethylolpropantrimethacrylat. Beispiele für Vinylmonomere sind Vinylether etc. Die Reaktivverdünner können bis zu 95 Gew.-%, vorzugsweise 30 bis 80% der Beschichtungszusammensetzung ausmachen.

Die erfindungsgemäßen UV-härtbaren Beschichtungssysteme enthalten übliche, dem Fachmann bekannte UV-Photoinitiatoren. Beispiele für radikalisch härtende Systeme sind Benzophenon und Derivate davon, Benzoin und Derivate davon, Acetophenon und Derivate davon, Anthrachinon, Thioxanthon und Derivate davon, oder auch phosphororganische Verbindungen. Beispiele für kationisch härtende Systeme sind Oniumsalze, insbesondere Diazoniumsalze, Sulfoniumsalze, oder Jodoniumsalze. Die Photoinitiatoren werden in üblichen, dem Fachmann geläufigen Mengen eingesetzt, insbesondere in Mengen 0,5 bis 15 Gew.-% der Beschichtungszusammensetzung, vorzugsweise 2 bis 10 Gew.-%.

Neben diesen Verbindungen können die Beschichtungszusammensetzungen übliche Polymerisationsinhibitoren, übliche Füllstoffe, weitere Pigmente, und übliche Additive enthalten, wie sie in der Lackindustrie oder der Druckfarbenindustrie eingesetzt werden. Als Pigmente eignen sich auch noch Ruß, Schichtsilikate, Titandioxid, Buntpigmente, Calciumcarbonat und Kaolin, und als Füllstoffe eignen sich beispielsweise Siliciumdioxid oder Aluminiumsilikat. Als Additive können übliche Additive aus der Lackindustrie oder Druckfarbenindustrie eingesetzt werden, insbesondere Dispergiermittel, Redispergiermittel, Polymerisationsinhibitoren, Antischaummittel, Katalysatoren, Haftvermittler, Verlaufsmittel, Verdickungsmittel oder Mattierungsmittel.

Die erfindungsgemäßen UV-Lacke und UV-Farben können je nach Anwendung unterschiedliche Pigmentgehalte aufweisen, wie dem Fachmann bekannt. Besonders bevorzugt liegt der Pigmentgehalt im Bereich von 2-45 Gew.-%.

Die modifizierten Effektpigmente können in den UV-Lacken oder UV-Druckfarben je nach Druckverfahren und Pigmenttyp verschiedenen Mengen eingesetzt werden, wie der folgenden Tabelle mit bevorzugten Gewichts-% Pigment pro Gesamtgewicht UV-Lack bzw. Tinte zu entnehmen ist.

| **Printing Process** | **Goldbronze** | **Aluminium** | **DECOMET®** |
|---|---|---|---|
| Flexodruck | 35 - 40 | 15 - 20 | 2,5 - 4,0 |
| Tiefdruck | 30 - 35 | 10 - 12 | 2,5 - 4,0 |
| Siebdruck | 35 - 40 | 15-20 | 4,0 - 6,0 |
| Offset | 30-45 | 15-25 | 2,5-5,0 |

Die UV-Härtung erfolgt vorzugsweise mit UV-Strahlungsquellen mit Emissionen im Wellenlängenbereich von 180 bis 420 nm, insbesondere von 200 bis 400 nm. Beispiele für solche Strahlungsquellen sind allgemein bekannte Strahlungsquellen und umfassen gepulste und ungepulste UV-Laser, gegebenenfalls dotierte Quecksilbermitteldruckstrahler, Quecksilberhochdruckstrahler und Quecksilberniederdruckstrahler, Gasentladungsröhren, UV-Punkstrahler wie z.B. UV-LEDs oder Schwarzlichtröhren. Weiterhin bevorzugt werden UV-Blitzlampen (Xenon) eingesetzt. Für Druckanwendungen werden bevorzugt UV-Lampen mit einer Leistung von 130-140 W/cm bei einer Druckgeschwindigkeit von 80 bis 100 m/min eingesetzt.

Die Trocknung und Härtung mithilfe der UV-Strahlungsquellen erfolgt auf übliche, dem Fachmann geläufige Art und Weise. Üblicherweise dauert die Bestrahlung und Aushärtung der Beschichtung oder Druckfarbe nur Bruchteile von Sekunden, wobei insbesondere UV-härtbare Hybrid-Systeme nachhärtende Systeme sein können, d. h. es kann noch eine gewisse Zeit dauern, bis sie ihre endgültigen Eigenschaften entwickeln.

Teil der Erfindung ist auch eine Verwendung, bei der das Beschichtungssystem durch Elektronenstrahlen gehärtet wird. Dabei handelt es sich um sogenannte ElectroBeamsysteme (EB). EB-Trockner sind Elektronenbeschleuniger und dem Fachmann für Elektronenstrahlhärtung von Lacken und Druckfarben bekannt. In nicht-thermischen Elektronenstrahl-Prozessen können kontrolliert Polymere und Lacke gehärtet werden. Die Härtung der Lacke findet mit niederenergetisch beschleunigten Elektronen statt. Moderne EB-Trockner arbeiten mit Beschleunigungsspannungen von 80 bis 125kV, welche besonders für die Härtung von Lacken und Druckfarben geeignet sind. Die Strahlungshärtung findet unter inerten Bedingungen statt, Stickstoff ist in den meisten Fällen das Inertgas der Wahl; gelegentlich kann auch Kohlendioxid eingesetzt werden, um den Sauerstoff aus der Bestrahlungskammer zu verdrängen. Diese Technologie zeichnet sich insbesondere durch die folgenden Vorteile aus: Keine Nachhärtung der Lacke, kompakte Anlagen, Verzicht auf teure Photoinitiatoren (UV), höhere Härtegeschwindigkeit, geringer Energiebedarf, weniger Ozonbildung.

Nach einem weiteren Aspekt der Erfindung können sogenannte UV-Wasser-Hybridsysteme eingesetzt werden. Diese Lacke oder Druckfarben sind vom Aufbau her vergleichbar mit üblichen Wasserlacken, sie werden jedoch durch Erhitzen und durch Bestrahlung mit UV getrocknet. Dabei wird durch den Einsatz von Wärme oder Heißluft zunächst physikalisch getrocknet (durch Wasserentzug). Im Anschluß wird durch UV-Bestrahlung die Polymerisation gestartet und die Beschichtung chemisch gehärtet und der finale Lackfilm erzeugt.

Einsatzgebiete des erfindungsgemäßen Beschichtungssystems sind vorzugsweise bei der Herstellung von Lacken, Farben, Druckfarben, Kosmetika wie z.B. Nagellack oder Kunststoffen. Diese weisen nach der Verarbeitung ausgezeichnete anwendungstechnische wie auch optische Eigenschaften auf, insbesondere mit einer sehr guten Abriebbeständigkeit in Kombination mit sehr guten metallischen Glanzeffekten. Die erfindungsgemäße Verwendung umfasst dabei insbesondere Offset-Druckfarben, Siebdruckfarben (auch inMould Technology), Flexodruckfarben, Überdrucklacke, Tiefdruckfarben, Tintenstrahltinten, Digitaldruckfarben (wie Ink-Jet) oder Kosmetika wie Nagellacken. Besonders eignen sich die erfindungsgemäßen Verwendungen auch zur Beschichtung von Kunststoffen, Holzteilen, Metallteilen, Glasteilen, als Coil & Can Coating, und zur Beschichtung von 3D-Bauteilen über eine dualcure Härtung mit 2K PU-Systemen.

Die strahlenhärtbaren bzw vorzugsweise UV-härtbaren Beschichtungszusammensetzungen gemäß der Erfindung umfassen die wie in Anspruch 1 oder 2 und vorstehend ausführlich beschriebenen Pigmente. Außerdem enthalten diese UV-vernetzbaren Beschichtungssysteme UV-härtbare Monomere, Bindemittel wie insbesondere Oligomere, Präpolymere und zumeist niedermolekulare reaktive Kohlenstoff-Kohlenstoff-Mehrfachbindungen enthaltende Harze, sowie gegebenenfalls Photoinitiatoren. Beispiele für die UV-härtbaren Monomere, Bindemittel und Photoinitiatoren sind vorstehend im Kontext der erfindungsgemäßen Verwendung ausführlich beschrieben.

In einem letzten Aspekt umfasst die Erfindung ein Verfahren zur Herstellung einer UV-gehärteten Beschichtung gemäß Anspruch 17 und das Härten des Beschichtungssystems unter Einwirkung von UV-Licht und/oder Elektronenstrahlen, wobei eine gehärtete Beschichtung entsteht, welche die erfindungsgemäßen Metalleffektpigmente mitvernetzt enthält.

Im Folgenden wird die Erfindung durch die nachfolgenden Beispiele näher erläutert.

### Beispiele

### Beispiel 1

430 g des Aluminiumpigments (Decomet(R) 1002 der Firma Schlenk Metallic Pigments, 10% in Isopropanol) wurden im ersten Schritt mit 10% (bezogen auf den Aluminiumanteil) SiO₂ beschichtet. Im anschließenden Modifizierungsschritt wurden 150 g Isopropanol zugegeben und die Mischung unter Rühren auf 40 °C erwärmt. Nach Erreichen dieser Temperatur wurden 6 g Ammoniak und 0,6 g des methacrylatfunktionellen Silans Dow Corning(R) Z 6030 der Firma Dow Corning zugegeben und die Mischung für weitere 2 h gerührt.

Im Anschluss wird diese Pigmentdispersion auf einen Festkörperanteil von 10 % eingestellt.

Dann werden 8 g Pigmentdispersion mit 12 g der UV-Druckfarbe Varnish UV VP/12213 der Firma Schlenk (eine UV-Druckfarbe auf Acrylatbasis) mit einem Flügelrührer bei einer Umdrehungsgeschwindigkeit von 20 UpM gemischt, bis eine homogene Mischung entstanden ist.

Anschliessend wird die erhaltene Druckfarbe im Tiefdruck (mit dem Erichsen Gravure Proofer) bei 150 lines/inch auf das Papiersubstrat Chromolux 700 appliziert.

Vor der UV-Härtung werden die Drucke bei 80°C, 30 min gelagert, damit die Lösungsmittelanteile vollständig entweichen können. Die UV-Härtung erfolgt bei einer Bandgeschwindigkeit von 10 m/min und einer Intensität der Strahlerlampe von 184 W/cm².

Die Ergebnisse der erfindungsgemäßen Druckfarbe für Deckvermögen, Glanz, und Abriebbeständigkeit sind in Tabelle 1 dargestellt.

### Beispiel 2

Herstellung und Anwendung wie im Beispiel 1, wobei zur Modifizierung des Effektpigments 1,2 g des Silans Dow Corning(R) Z 6030 eingesetzt wurden.

### Beispiel 3

Herstellung und Anwendung wie im Beispiel 1, wobei zur Modifizierung des Effektpigments 2,4 g des Silans Dow Corning(R) Z 6030 eingesetzt wurden.

### Vergleichsbeispiel A

Statt einer erfindungsgemäßen Pigmentdispersion mit speziell modifizierten Pigmenten wurde eine Dispersion mit leafing Pigment (Decomet® UV 2798/10) verwendet. Alle sonstigen Angaben zur Herstellung der Druckfarbe und Anwendung entsprechen denen der Beispiele 1 bis 3.

### Vergleichsbeispiel B

Statt einer erfindungsgemäßen Pigmentdispersion mit speziell modifizierten Pigmenten wurde eine Dispersion mit nicht modifizierten unbeschichteten Pigment (Decomet® 1002, 10% Slurry in Isopropanol) verwendet. Alle sonstigen Angaben zur Herstellung der Druckfarbe und Anwendung entsprechen denen der Beispiele 1 bis 3.

### Vergleichsbeispiel C

Statt einer erfindungsgemäßen Pigmentdispersion mit speziell modifizierten Pigmenten wurde eine Dispersion mit nicht modifiziertem nur mit einer Siliciumdioxid beschichtetem Pigment verwendet. Dieses wurde analog zu Bsp. 1 hergestellt, allerdings wurde auf den Modifizierungsschritt mit dem methacrylfunktionalisierten Silan verzichtet. Alle sonstigen Angaben zur Herstellung der Druckfarbe und Anwendung entsprechen denen der Beispiele 1 bis 3.

In der folgenden Tabelle 1 sind die Ergebnisse der erfindungsgemäßen Beispiele und der Vergleichsbeispiele aufgeführt.

**Tabelle 1**

| **Druckfarbe** | **Deckvermögen¹** | **Glanzpunkte²** | **Abriebtest³ Gegenscheuer-fläche** | **Abriebtest⁴ bedrucktes Papier** | **Summe Abriebtest** |
|---|---|---|---|---|---|
| **Bsp. 1** | 0,60 | 382 | 5 | 4,5 | 9,5 |
| **Bsp. 2** | 0,63 | 384 | 5 | 4,5 | 9,5 |
| **Bsp. 3** | 0,58 | 350 | 4 | 3,5 | 7,5 |
| **Vergl. A** | 1,56 | 475 | 1,5 | 1 | 2,5 |
| **Vergl. B** | 0,59 | 362 | 3 | 2 | 5 |
| **Vergl. C** | 0,44 | 299 | 3,5 | 3 | 6,5 |

| | | | | | |
|---|---|---|---|---|---|
| ¹ Messung des Tiefdrucks mit Densitometer (Techkon RT120) nach vorheriger Kalibrierung des Substrats ² Messung des Tiefdrucks mit einem Reflektometer (Byk micro-gloss Gerät) bei 60°, Messung in Anlehnung an DIN 67530, adaptiert auf höhere Werte. Sehr gut: Werte von 370 und mehr, gut: Werte von mehr als 300 bis weniger 370, schlecht: Werte von weniger als 300 ^{3,4} Abriebtest in Anlehnung an ISO 105-A03 DIN EN 20105-A03:1994 Bewertung der Farbabweichung mit dem Graumaßstab. Der Abriebtest wird visuell beurteilt, in Bezug auf die Anfärbung der Gegenscheuerfläche (3) und die Beschädigung des bedruckten Papiers (4). Ausschlaggebende Bewertung der Abriebbeständigkeit ist die Summe (5) der Bewertungen von Abrieb Gegenscheuerfläche (3) und Abrieb bedrucktes Papier (4). Note 5: sehr gut, Note 4: gut, Note 3: schlecht, Note 2: sehr schlecht; Note 1: extrem schlecht. Die Bestimmung der Abriebbeständigkeit erfolgt nach Abriebbelastung durch das Gerät "Prüfbau" nach mindestens 24h Konditionierung der Drucke bei Raumtemperatur. Es werden Papierkreise (Standardpapier Weiss 80g/m²) mit einem Durchmesser von 4,5 cm ausgestanzt und mit einer rotierenden Bewegung (4 Umdrehungen pro 60 Doppelhübe) über den Tiefdruck mit einer Gesamtbelastung von ca. 613 g in Form von 120 Doppelhüben geführt. | | | | | |

Die Ergebnisse zeigen, dass die Verwendung der erfindungsgemäßen modifizierten Pigmenten in UV-Druckfarben bezüglich Abriebfestigkeit der Verwendung von leafing Pigmenten oder nur mit einer Siliciumdioxidschicht beschichteten oder unbeschichteten Pigmenten deutlich überlegen sind. Das Deckvermögen und der Glanz der Beispiele 1 bis 3 entsprechen den Ausführungen vergleichbarer nicht-modifizierter unbeschichteter Pigmente. Verglichen mit nicht-modifizierten mit Siliciumdioxid-beschichteten Pigmenten weisen die erfindungsgemäßen Pigmente ein besseres Deckvermögen, einen besseren Glanz und eine bessere Abriebfestigkeit auf.

## Patentansprüche

1. Verwendung eines modifizierten Effektpigments in einer strahlenhärtbaren Beschichtungszusammensetzung, wobei das modifizierte Effektpigment keine organischen Oligomere oder Polymere aufweist und wobei das modifizierte Effektpigment ein Effektpigment ist, welches beschichtet ist mit einer Schicht aus einem Metalloxid, umfassend Siliziumdioxid, Aluminiumoxid, oder Mischungen davon, **dadurch gekennzeichnet, dass** an die Schicht mindestens eine organische Verbindung, die eine oder mehrere funktionelle Gruppen mit einer Kohlenstoff-Kohlenstoff-Mehrfachbindung aufweist, gebunden ist.

2. Verwendung eines modifizierten Effektpigments in einer strahlenhärtbaren Beschichtungszusammensetzung, wobei das modifizierte Effektpigment keine organischen Oligomere oder Polymere aufweist und wobei das modifizierte Effektpigment ein Effektpigment ist, an das mindestens eine organische Verbindung, die eine oder mehrere funktionelle Gruppen mit einer Kohlenstoff-Kohlenstoff-Mehrfachbindung aufweist, gebunden ist.

3. Verwendung gemäß Anspruch 1 oder 2, wobei das modifizierte Effektpigment nicht als Pulver eingesetzt wird.

4. Verwendung gemäß einem der Ansprüche 1 bis 3, wobei es sich bei der strahlenhärtbaren Beschichtungszusammensetzung um eine UV-härtbare Beschichtungszusammensetzung handelt.

5. Verwendung gemäß einem der Ansprüche 1 bis 4, **dadurch gekennzeichnet, dass** die organische Verbindung auf dem modifiziertem Effektpigment in der gehärteten Beschichtung mit einem Bindemittel der Beschichtung mitvernetzt ist.

6. Verwendung gemäß einem der Ansprüche 1 bis 5, wobei die Mehrfachbindung eine C=C ist.

7. Verwendung gemäß einem der Ansprüche 1 bis 6, wobei es sich bei der funktionellen Gruppe um eine Acrylatgruppe, eine Methacrylatgruppe, ein gespanntes Ringsystem oder eine Vinylgruppe handelt.

8. Verwendung gemäß einem der Ansprüche 1 bis 7, **dadurch gekennzeichnet, dass** es sich bei der organischen Verbindung um eine monomere Verbindung handelt, und/oder dass es sich bei der organischen Verbindung um ein Acrylsilan, ein Methacrylsilan, ein Maleinsäureanhydrid, eine Vinylphosphonsäure oder ein Vinylphosphonat handelt.

9. Verwendung gemäß einem der Ansprüche 1 und 3 bis 8, **dadurch gekennzeichnet, dass** die organischen Verbindungen über eine Silangruppe, eine Phosphonatgruppe, eine Titanat, eine Borat oder eine der Säuregruppen kovalent an der Metalloxidschicht auf dem Effektpigment gebunden sind.

10. Verwendung gemäß einem der Ansprüche 2 bis 8, **dadurch gekennzeichnet, dass** die organischen Verbindungen über eine Silangruppe, eine Phosphonatgruppe, eine Titanat, eine Borat oder eine der Säuregruppen an das Effektpigment gebunden sind.

11. Verwendung gemäß einem der Ansprüche 1 bis 10, wobei das Effektpigment ein Metalleffektpigment ist, ausgewählt aus der Gruppe umfassend Aluminium, Titan, Zirkonium, Kupfer, Zink, Gold, Silber, Silicium, Zinn, Stahl, Eisen sowie Legierungen davon oder Mischungen davon, oder das Effektpigment ein Perlglanzpigment, Glimmer, oder Mischungen davon ist.

12. Verwendung gemäß einem der Ansprüche 1 bis 11, wobei es sich bei der strahlenhärtbaren Beschichtungszusammensetzung um ein lösemittelbasiertes System, ein lösemittelfreies System, ein UV-Wasser-Hybridsystem oder ein ElectroBeam-System handelt.

13. Verwendung gemäß einem der Ansprüche 1 bis 12, **dadurch gekennzeichnet, dass** die strahlenhärtbare Zusammensetzung radikalisch oder kationisch polymerisierbare Monomere, Bindemittel und Photoinitiatoren enthält, wobei die Monomere vorzugsweise Acrylatmonomere, Methacrylatmonomere oder Vinylmonomere sind.

14. Verwendung gemäß einem der Ansprüche 1 bis 13, **dadurch gekennzeichnet, dass** das modifizierte Effektpigment besteht aus einem Effektpigment, welches gegebenenfalls beschichtet ist mit einer Schicht aus einem Metalloxid, umfassend Siliziumdioxid, Aluminiumoxid, oder Mischungen davon, und mindestens einer organischen Verbindung, die keine oligomere oder polymere Verbindung ist und die eine oder mehrere funktionelle Gruppen mit einer Kohlenstoff-Kohlenstoff-Mehrfachbindung aufweist, wobei die organischen Verbindung an das Effektpigment oder die gegebenenfalls vorliegende Schicht aus einem Metalloxid gebunden ist.

15. Verwendung gemäß einem der Ansprüche 1 bis 14, **dadurch gekennzeichnet, dass** es sich bei der Beschichtungszusammensetzung um Lacke, Farben, Druckfarben, Nagellack, Tinten, Oberflächenbeschichtungen oder Kunststoffe handelt.

16. Strahlenhärtbare, vorzugsweise UV-härtbare Beschichtungszusammensetzung, enthaltend ein modifiziertes Pigment wie in einem der Ansprüche 1 bis 15 definiert sowie radikalisch oder kationisch polymerisierbare Monomere, Bindemittel, und gegebenenfalls Photoinitiatoren.

17. Verfahren zur Herstellung einer strahlengehärteten Beschichtung, vorzugsweise einer UV-gehärteten Beschichtung, umfassend das Auftragen einer strahlenhärtbaren Beschichtungszusammensetzung gemäß Anspruch 16 und das Härten der Beschichtungszusammensetzung unter Einwirkung von UV-Licht und/oder Elektronenstrahlen und gegebenenfalls unter vorherigem Entfernen der flüchtigen Anteile durch physikalische Trocknung, wobei eine gehärtete Beschichtung entsteht.

## Claims

1. Use of a modified effect pigment in a radiation-curable coating composition, wherein the modified effect pigment has no organic oligomers or polymers and wherein the modified effect pigment is an effect pigment which is coated with a layer of a metal oxide, comprising silicon dioxide, aluminium oxide, or mixtures thereof, **characterized in that** at least one organic compound, which has one or more functional groups with a carbon-carbon multiple bond, is bound to the layer.

2. Use of a modified effect pigment in a radiation-curable coating composition, wherein the modified effect pigment has no organic oligomers or polymers and wherein the modified effect pigment is an effect pigment to which at least one organic compound, which has one or more functional groups with a carbon-carbon multiple bond, is bound.

3. Use according to claim 1 or 2, wherein the modified effect pigment is not used as powder.

4. Use according to one of claims 1 to 3, wherein the radiation-curable coating composition is a UV-curable coating composition.

5. Use according to one of claims 1 to 4, **characterized in that** the organic compound on the modified effect pigment in the cured coating is co-crosslinked with a binder of the coating.

6. Use according to one of claims 1 to 5, wherein the multiple bond is a C=C.

7. Use according to one of claims 1 to 6, wherein the functional group is an acrylate group, a methacrylate group, a strained ring system or a vinyl group.

8. Use according to one of claims 1 to 7, **characterized in that** the organic compound is a monomeric compound, and/or **in that** the organic compound is an acrylic silane, a methacrylic silane, a maleic anhydride, a vinyl phosphonic acid or a vinyl phosphonate.

9. Use according to one of claims 1 and 3 to 8, **characterized in that** the organic compounds are covalently bound to the metal oxide layer on the effect pigment via a silane group, a phosphonate group, a titanate, a borate or one of the acid groups.

10. Use according to one of claims 2 to 8, **characterized in that** the organic compounds are bound to the effect pigment via a silane group, a phosphonate group, a titanate, a borate or one of the acid groups.

11. Use according to one of claims 1 to 10, wherein the effect pigment is a metal effect pigment selected from the group comprising aluminium, titanium, zirconium, copper, zinc, gold, silver, silicon, tin, steel, iron as well as alloys thereof or mixtures thereof, or the effect pigment is a pearlescent pigment, mica, or mixtures thereof.

12. Use according to one of claims 1 to 11, wherein the radiation-curable coating composition is a solvent-based system, a solvent-free system, a UV-water hybrid system or an electron beam system.

13. Use according to one of claims 1 to 12, **characterized in that** the radiation-curable composition contains radically or cationically polymerizable monomers, binders and photoinitiators, wherein the monomers are preferably acrylate monomers, methacrylate monomers or vinyl monomers.

14. Use according to one of claims 1 to 13, **characterized in that** the modified effect pigment consists of an effect pigment which is optionally coated with a layer of a metal oxide comprising silicon dioxide, aluminium oxide, or mixtures thereof, and at least one organic compound, which is not an oligomeric or polymeric compound and which has one or more functional groups with a carbon-carbon multiple bond, wherein the organic compound is bound to the effect pigment or the optionally present layer of a metal oxide.

15. Use according to one of claims 1 to 14, **characterized in that** the coating composition is a varnish, a paint, a printing ink, nail varnish, an ink, a surface coating or a plastic.

16. Radiation-curable, preferably UV-curable coating composition, containing a modified pigment as defined in one of claims 1 to 15 as well as radically or cationically polymerizable monomers, binders and optionally photoinitiators.

17. Process for the production of a radiation-cured coating, preferably a UV-cured coating, comprising applying a radiation-curable coating composition according to claim 16 and curing the coating composition under the effect of UV light and/or electron beams and optionally with prior removal of the volatile fractions through physical drying, wherein a cured coating is formed.

## Revendications

1. Utilisation d'un pigment à effet modifié dans une composition de revêtement radiodurcissable, le pigment à effet modifié ne comportant aucun oligomère ou polymère organiques et le pigment à effet modifié étant un pigment à effet qui est revêtu d'une couche d'oxyde métallique, comprenant du dioxyde de silicium, de l'oxyde d'aluminium ou des mélanges de ceux-ci, **caractérisée en ce qu'**au moins un composé organique, qui comporte un ou plusieurs groupes fonctionnels à liaison multiple carbone-carbone, est lié à la couche.

2. Utilisation d'un pigment à effet modifié dans une composition de revêtement radiodurcissable, le pigment à effet modifié ne comportant aucun oligomère ou polymère organiques et le pigment à effet modifié étant un pigment à effet auquel est lié au moins un composé organique, qui comporte un ou plusieurs groupes fonctionnels à liaison multiple carbone-carbone.

3. Utilisation selon la revendication 1 ou 2, dans laquelle le pigment à effet modifié n'est pas utilisé sous forme de poudre.

4. Utilisation selon l'une des revendications 1 à 3, dans laquelle la composition de revêtement radiodurcissable est une composition de revêtement durcissable par UV.

5. Utilisation selon l'une des revendications 1 à 4, **caractérisée en ce que** le composé organique est réticulé avec un liant du revêtement dans le revêtement durci sur le pigment à effet modifié.

6. Utilisation selon l'une des revendications 1 à 5, dans laquelle la liaison multiple est une liaison C=C.

7. Utilisation selon l'une des revendications 1 à 6, dans laquelle le groupe fonctionnel est un groupe acrylate, un groupe méthacrylate, un composé cyclique tendu ou un groupe vinyle.

8. Utilisation selon l'une des revendications 1 à 7, **caractérisée en ce que** le composé organique est un composé monomère, et/ou **en ce que** le composé organique est un acrylosilane, un méthacrylsilane, un anhydride maléique, un acide vinylphosphonique ou un vinylphosphonate.

9. Utilisation selon l'une des revendications 1 et 3 à 8, **caractérisée en ce que** les composés organiques sont liés de manière covalente à la couche d'oxyde métallique sur le pigment à effet par le biais d'un groupe silane, d'un groupe phosphonate, d'un titanate, d'un borate ou d'un des groupes acides.

10. Utilisation selon l'une des revendications 2 à 8, **caractérisée en ce que** les composés organiques sont liés au pigment à effet par le biais d'un groupe silane, d'un groupe phosphonate, d'un titanate, d'un borate ou d'un des groupes acides.

11. Utilisation selon l'une des revendications 1 à 10, dans laquelle le pigment à effet est un pigment à effet métallique, choisi dans le groupe comprenant l'aluminium, le titane, le zirconium, le cuivre, le zinc, l'or, l'argent, le silicium, l'étain, l'acier, le fer ainsi que des alliages de ceux-ci ou des mélanges de ceux-ci, ou le pigment à effet est un pigment nacré, du mica ou des mélanges de ceux-ci.

12. Utilisation selon l'une des revendications 1 à 11, dans laquelle la composition de revêtement radiodurcissable est un système à base solvantée, un système sans solvant, un système hybride UV-aqueux ou un système à faisceau d'électrons.

13. Utilisation selon l'une des revendications 1 à 12, **caractérisée en ce que** la composition radiodurcissable contient des monomères polymérisables de manière radicalaire ou cationique, des liants et des photo-initiateurs, les monomères étant de préférence des monomères d'acrylate, des monomères de méthacrylate ou des monomères de vinyle.

14. Utilisation selon l'une des revendications 1 à 13, **caractérisée en ce que** le pigment à effet modifié est constitué d'un pigment à effet, qui est éventuellement revêtu d'une couche d'oxyde métallique, comprenant du dioxyde de silicium, de l'oxyde d'aluminium ou des mélanges de ceux-ci, et d'au moins un composé organique, qui n'est pas un composé oligomère ou polymère et qui comporte un ou plusieurs groupes fonctionnels à liaison multiple carbone-carbone, le composé organique étant lié au pigment à effet ou à la couche d'oxyde métallique éventuellement existante.

15. Utilisation selon l'une des revendications 1 à 14, **caractérisée en ce que** la composition de revêtement est un vernis, une peinture, une encre d'impression, du vernis à ongle, une encre, un revêtement de surface ou une matière plastique.

16. Composition de revêtement radiodurcissable, de préférence durcissable par UV, contenant un pigment modifié comme défini dans l'une des revendications 1 à 15 ainsi que des monomères polymérisables de manière radicalaire ou cationique, des liants, et éventuellement des photo-initiateurs.

17. Procédé de fabrication d'un revêtement durci par radiation, de préférence un revêtement durci par UV, comprenant l'application d'une composition de revêtement radiodurcissable selon la revendication 16 et le durcissement de la composition de revêtement sous l'effet de lumière UV et/ou de faisceaux d'électrons et éventuellement avec élimination préalable des ingrédients volatils par séchage physique, un revêtement durci étant obtenu.
